# EUROPÄISCHE PATENTSCHRIFT

(11) **EP 1 918 015 B1**
(45) Veröffentlichungstag und Bekanntmachung des Hinweises auf die Patenterteilung: **13.03.2013**
(21) Anmeldenummer: 07014158.5
(22) Anmeldetag: 19.07.2007
(51) Int. Cl.: B01D 53/50, B01D 53/68, B01D 53/70, B01D 53/86, F23G 5/00, F23G 5/50, F23J 7/00, F23J 15/00

(54) **Rauchgas-Äquilibrierung in Müllverbrennungsanlagen**
Flue gas equilibration in waste incineration plants
Equilibrage des gaz de fumées dans des installations de combustion de déchets

(30) Priorität: 16.10.2006 DE 102006049506
(43) Veröffentlichungstag der Anmeldung: 07.05.2008
(73) Patentinhaber: CheMin GmbH, 86167 Augsburg (DE)
(72) Erfinder: Krüger, Jörg, Dr., 92421 Schwandorf (DE); Spiegel, Wolfgang, Dr., 86415 Mering (DE); Jordan, Renate, Dr., 81667 München (DE); Magel, Gabriele, Dr., 86157 Augsburg (DE)
(74) Vertreter: Müller-Wolff, Thomas

(56) Entgegenhaltungen:
- EP-A- 0 346 100
- EP-A- 0 702 078
- EP-A- 1 050 333
- EP-A- 1 865 257
- WO-A-96/20779
- AT-B- 273 902
- DE-C1- 10 021 517
- US-A- 4 975 257

## Beschreibung

Die vorliegende Erfindung betrifft ein Verfahren zur Rauchgas-Äquilibrierung in Müllverbrennungsanlagen sowie eine Vorrichtung zur Durchführung des Verfahrens.

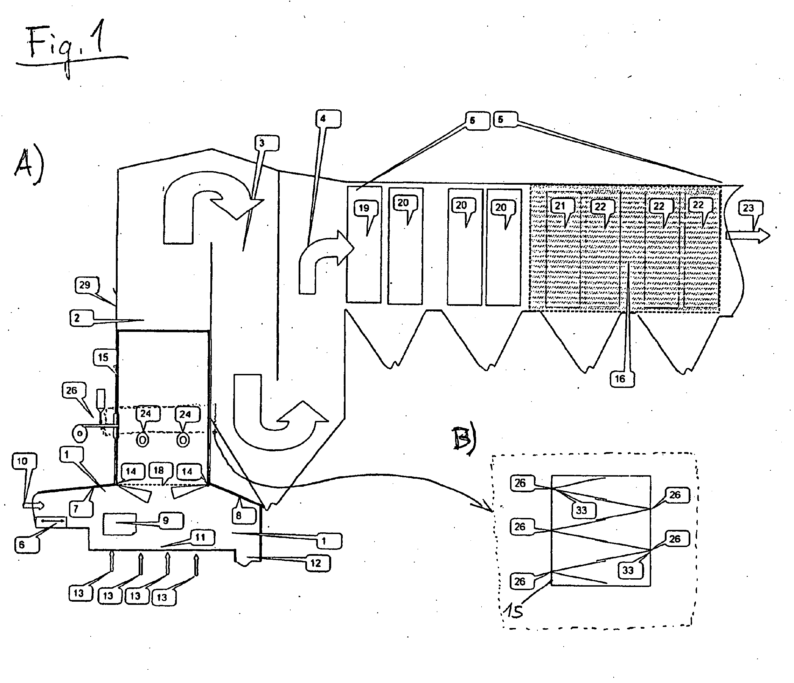

In Müllverbrennungsanlagen nach dem Stand der Technik wird Müll, wie in Fig. 1 veranschaulicht, aus der Müllzufuhr 10 über einen Zuteiler 6 in den Feuerraum 1 eingebracht. Die Verbrennung des Mülls erfolgt auf einem Verbrennungsrost 11, der mit Primärluft 13 beaufschlagt wird, um eine zur Verbrennung ausreichende Menge Sauerstoff bereitzustellen. Hierbei kann vor allem bei Müllfraktionen mit stark schwankendem Heizwert eine unvollständige Verbrennung des aufgegebenen Mülls auftreten. So liegt der mittlere Heizwert von Hausmüll bei etwa 10 MJ/kg. Dieser Wert kann jedoch innerhalb einer Charge von 6 MJ/kg bis zu 30 MJ/kg schwanken. Vor allem während der Zugabe von Ersatzbrennstoffen mit sehr hohem Heizwert kann es zur Aufgabe von Fraktionen mit lokal sehr hohem Heizwert und gleichsinnig gesteigertem Sauerstoffbedarf kommen. Durch die hohe Energiedichte und den hohen Energieeintrag wird die Fraktion nur teilweise oxidiert und gleichzeitig in einem Pyrolyseprozess ein brennbares Pyrolysegas erzeugt und ausgetragen. Die Pyrolysegase werden über Thermik im Gasstrom mitgerissen und sollen dort mit weiterem Sauerstoff der Primärluft und/oder Sekundärluft oberhalb des aufgegebenen Mülls abbrennen. Dieses Ziel wird nur zum Teil erreicht.
Nachfolgend werden die Abgase zur Wiedergewinnung der bei der Verbrennung anfallenden Wärmeenergie durch Strahlungszüge 2, 3 und 4 sowie konvektive Züge 5, umfassend Schutzverdampfer 19, Überhitzer 20, Verdampfer 21 und Economiser 22, geleitet.

Für eine optimale Wärmerückgewinnung ist ein möglichst gleichmäßiger Abgasstrom mit einheitlicher Temperatur zu gewährleisten. Problematisch ist hierbei die inhomogene Zusammensetzung der Abgase infolge der Inhomogenität des Mülls. Bei den zuvor beschriebenen Pyrolyseprozessen können beim Eintritt in den ersten Zug inhomogene Gasgemische mit ausgetragen werden. Inhomogen bezieht sich hierbei sowohl auf die physikalischen als auch auf die chemischen Eigenschaften des Rauchgases.

Physikalisch gesehen können Rauchgasvolumina mit stark unterschiedlicher Lokaltemperatur ausgetragen werden, welche eine gleichmäßige Gesamtströmung sowie Wärmerückgewinnung in den nachfolgenden Baugruppen beeinträchtigen. Durch thermische Effekte werden insbesondere im ersten Zug sehr hohe Geschwindigkeiten von über 15 m/s erzeugt, die in anderen Bereichen des gleichen Zuges zu geringeren Geschwindigkeiten oder auch zur Umkehr der Strömung führen. Der Wärmeübergang wird durch diese inhomogenen Strömungen behindert.

Chemisch gesehen können Gasvolumina mit Resten an Pyrolysegas sowie langsam oxidierenden Pyrolyseprodukten mit ausgetragen werden, welche erst in den angrenzenden Zügen abreagieren. Die Rauchgasanteile mit erhöhter Konzentration an Pyrolyseprodukten sind thermisch und chemisch im Ungleichgewicht. Dieses Ungleichgewicht führt an den Übergangsbereichen zu sauerstoffreicheren Rauchgasanteilen und im Rahmen der nachträglichen Oxidation zu extremen Temperatur- und Konzentrationsgradienten. Hierbei wird der Anteil an festen und gasförmigen Verbrennungsprodukten durch die abrupt und unkontrolliert entstehenden Temperatur- und Stoffgradienten lokal stark verändert. In der nachfolgenden Abkühlung zeigen die Rauchgasvolumina eine hohe Übersättigung und können metastabile Bereiche mit gasförmig gelösten Verunreinigungen und Verbrennungsprodukten ausbilden. Aus diesen metastabilen Gasphasen kann es zur Bildung toxischer Verbindungen und auf den Wärmetauscherflächen zur unkontrollierbaren Abscheidung von korrosiven Belägen aus nicht äquilibrierten, übersättigten Gasphasen kommen.

Weiterhin werden in den nachträglichen, stark Wärme freisetzenden Nachverbrennungen metastabile, toxische Verbindungen gebildet. Die toxischen Verbindungen wie aromatische Kohlenwasserstoffe, Dioxine und Furane müssen nachträglich und kostenintensiv aus dem Rauchgas über Filtrationsmethoden entfernt werden. Vor allem bei Verbrennungsanlagen mit inhomogenem Brennstoff und/oder diskontinuierlicher Brennstoffzugabe können so kurzfristige Maxima an Pyrolyseprodukten im Rauchgas auftreten und eine kurzfristig extrem gesteigerte Belastung des Rauchgases mit Verunreinigungen und toxischen Verbindungen zur Folge haben. Um einen Durchbruch der toxischen Verbindungen durch die Rauchgasreinigung in die Abluft zuverlässig zu verhindern, müssen solche Verbrennungsanlagen mit kostspieligen Rauchgas-reinigungsvorrichtungen mit präziser Steuer- und Regeltechnik versehen werden.

Weiterhin problematisch ist die Tatsache, dass die reaktionsfähigen Pyrolyseprodukte in den nachfolgenden Zügen im Rahmen ihrer nachträglichen Reaktion Gemische kondensierender Reaktionsprodukte wie z. B. Salze auf den Wärmetauscherflächen bilden, welche verstärkt die Belagbildung fördern und das Abschalten der Anlage zur Reinigung der Innenwände der Züge notwendig machen. Dies verringert die Betriebszeit der gesamten Anlage und erhöht die Personalkosten.

Neben der Belagbildung führen vor allem Salze der Halogene im Rahmen der unkontrollierten Kondensation aus inhomogenem Rauchgas eine stark beschleunigte Korrosion der Innenwände der Züge herbei, was ebenfalls zu vermeiden ist.

Schließlich werden durch inhomogene Rauchgase auch nachträglich Schwebstoffe wie z. B. Ruß erzeugt. Die Schwebstoffe gelangen in die abschließende Rauchgasreinigung und schränken dort die Effektivität der Reinigungsvorrichtung ein.

Insbesondere das gleichzeitige Auftreten von hinderlichen Schwebstoffen und nachgebildeten, toxischen Verbindungen belastet die Rauchgasreinigung zusätzlich.

DE 100 21 517 C1 beschreibt ein Verfahren zur Verminderung der Hochtemperaturkorrosion, wobei Lösungen oder Dispersionen von Eisenverbindungen und/oder Siliziumverbindungen und der Aikaliverbindungen verwendet werden. Hinsichtlich der Verwendung von Eisen werden jedoch weder Oxide noch andere Verbindungen genannt, noch wird spezifiziert, dass Eisenverbindungen allein eingesetzt werden können.

EP-A-0 346 100 betrifft ein Verfahren zur effektiveren Kohleverbrennung unter reduzierenden Bedingungen unter Verwendung eines Ferrocen-Katalysators. Der Katalysator bleibt bei diesem Prozess definitionsgemäß erhalten und wird nicht zu Eisenoxid umgesetzt.

EP-A-1 865 257 offenbart ein Verfahren und eine Vorrichtung zur Reduzierung halogensalzinduzierter Korrosionen an den Belägen der Heizflächen von Wärmetauschereinrichtungen eines Verbrennungskessels und zur Vermeidung der de-Novo-Synthese von Dioxinen und Furanen, wobei die Vorrichtung aus einem als Injektor oder Druckzerstäuber ausgebildeten SO3-Brenner besteht, der eine zentrische Leitung für ein sauerstoffhaltiges Trägermedium und eine konzentrisch hierzu angeordnete Leitung für ein pulverförmiges schwefelhaltiges Produkt aufweist. In dem Verfahren wird kristalliner oder amorpher, pulverförmiger Schwefel mit mindestens zweifach überstöchiometrischer Sauerstoffmenge in einen aus einem Feuerraum aufsteigenden Rauchgasstrom eingeblasen, aufgeheizt, gezündet und verbrannt.

Aufgabe der vorliegenden Erfindung ist es, ein Verfahren sowie eine Vorrichtung zur beschleunigten Äquilibrierung von Rauchgas in Müllverbrennungsanlagen bereitzustellen, welche die Nachteile des Standes der Technik überwinden und eine nachträgliche Entstehung von schädlichen, metastabilen und/oder toxischen Verbindungen aus im Ungleichgewicht unkontrolliert reagierenden Pyrolysegasen verhindern.

Die Lösung der vorgenannten Aufgabe wird durch ein Verfahren gemäß Anspruch 1 und eine Vorrichtung gemäß Anspruch 4 bereitgestellt. Weitere Vorteile ergeben sich aus der nachfolgenden Beschreibung.

Wesentlich im Sinne der vorliegenden Erfindung ist das Einbringen von brennbaren, nicht-oxidischen Eisenverbindungen in das inhomogene Rauchgas über einen sauerstoffreichen Gasstrom. Entscheidend ist hierbei die Verwendung einer Eisenverbindung, welche im Rahmen der Oxidation gasförmige Produkte ausbildet, damit ihre Struktur zerstört wird. Mögliche Eisenverbindungen sind zum Beispiel Eisensalze organischer Säuren wie z. B. Eisen(II)-oxalat, Eisen(II)-acetat oder auch anorganische Eisenverbindungen wie Eisen-Carbonyl-Verbindungen oder Sulfide wie FeS oder FeS₂. Die Eisenverbindung wird zusammen mit einem Sauerstoffüberschuss in das inhomogene Rauchgas eingeleitet, gezündet und unter exothermer Reaktion oxidiert.

Die durch die exotherme Verbrennung erzeugten, feinsten Eisenoxid-Partikel mit hoher Eigentemperatur werden im Rauchgasvolumen verteilt und es wird eine reaktive Oberfläche mit erhöhter Temperatur zur Oxidation von metastabilen Pyrolyseprodukten bereitgestellt.

Vorteilhaft erfolgt das Einbringen der Eisenverbindung quer zur Strömungsrichtung des Rauchgases, z. B. durch Verwendung von mehreren Düsenköpfen, angeordnet in einer horizontalen Ebene des 1. Zuges, deren Ausblasbereiche überlappen. Durch die ungleichsinnige Ausrichtung der Strömungsrichtung von Rauchgas und sauerstoffhaltigem Gasstrom werden turbulente Strömungsanteile verstärkt und die entstehenden Eisenoxidpartikel zusammen mit dem Gasstrom und dem Rauchgas innig vermischt. Die Eisenoxidpartikel mit erhöhter Eigentemperatur werden so vollständig über die gesamte Querschnittsfläche des Rauchgasstroms verteilt und ermöglichen eine umfassende, beschleunigte Äquilibrierung. Höhere Strömungsgeschwindigkeiten in bestimmten Querschnittsbereichen können über eine höhere Partikelkonzentration durch angepasste Ausblasbereiche der Düsenköpfe kompensiert werden.

Die Erfinder gehen davon aus, dass die heißen, frisch gebildeten Eisenoxidpartikel die Oxidation der nicht abreagierten Pyrolyseprodukte erleichtern. Die unter Zerstörung der ursprünglichen Struktur der Eisenverbindung gebildeten Eisenoxidpartikel sind hierbei so klein, dass sie im Rauchgasstrom getragen und mitgeschleppt werden. Die Eisenoxidpartikel verteilen sich im Rauchgas, stellen eine große, frisch gebildete Oberfläche bereit und bewirken auch in den nachfolgenden Zügen die erleichterte Äquilibrierung des Rauchgases. Reste an Pyrolysegas werden bei erhöhter Temperatur in Kombination mit dem Sauerstoffüberschuss direkt gezündet und verbrannt. Langsam reagierende Pyrolyseprodukte werden durch das heiße Eisenoxid beschleunigt zur Reaktion gebracht. Das Gleichgewicht im Rauchgas wird beschleunigt herbeigeführt und lokale Reaktionen unter Ausbildung von schädlichen Produkten vermieden. Das Rauchgas wird erfindungsgemäß äquilibriert und homogenisiert. Intensive, punktuelle Schadstoff-Belastungen, wie sie für stark inhomogene Verbrennungsbedingungen im Feuerraum charakteristisch waren, werden erfindungsgemäß deutlich gleichmäßiger gehalten. Das erfindungsgemäße Verfahren erlaubt die Verwendung von kostengünstigeren Rauchgasreinigungsanlagen mit geringerer, maximaler Filtrationskapazität.

Wenn Pyrolyseprodukte insbesondere durch eine verlangsamte Strömungsgeschwindigkeit des Rauchgases nahe zur Wand ausgetragen werden, kann ein Teil der Eisenverbindungen bevorzugt parallel zur Seitenwand des Zuges eingeleitet werden. Hierbei machten die Erfinder die überraschende Entdeckung, dass bei einer Einleitung einer pulverförmigen Eisenverbindung wie z. B. FeS₂ schräg zur Wand hin mit einem Druck von bis zu 4 bar die Belagbildung auf der Wand deutlich beeinflusst wird. Zum einen fällt die Belagbildung geringer aus, während die Menge an ausgetragenem Material, welches in der abschließenden Reinigung anfällt, ansteigt. Zum anderen entsteht ein gleichmäßigerer Belag mit weniger Einschlüssen. Letzteres geht mit einer verbesserten Wärmeleitfähigkeit des Belags einher und macht eine Reinigung erst bei größeren Belagdicken notwendig.

Mit direkt über einen Gasstrom eingebrachten, staubfeinen Eisenverbindungen mit Korngrößen unterhalb von 0,8mm konnte der erfindungsgemäße Effekt herbeigeführt werden. Hierbei sind Verbindungen mit höherer Dichte wie z. B. Pyrit, welches als natürliches Mineral von hoher Dichte im Handel erhältlich ist, bevorzugt in Korngrößen von unterhalb 0,5mm zu verwenden, um eine bessere Fluidisierbarkeit des dichten Pulvers im Gasstrom während des Einleitens in den Rauchgasstrom zu gewährleisten.

Bevorzugt werden Eisensalze organischer Säuren bzw. Carbonylverbindungen in einer brennbaren Lösung gelöst in den Rauchgasstrom eingebracht. Die Lösung wird über Düsenköpfe im Rauchgasvolumen versprüht bzw. vernebelt und verbrannt. Durch Zugabe von zusätzlichem Lösungsmittel zu einer konzentrierten Lösung kann über bekannte Vorrichtungen die Konzentration der Eisenverbindung in der Lösung schnell und exakt variiert werden. So lässt sich die während der Verbrennung der Eisenverbindung erzeugte Wärmeenergie durch Variation der Konzentration der Eisenverbindung gezielt z. B. an Müllfraktionen mit extrem unterschiedlichem Brennwert und Rauchgasvolumen anpassen.

Bei der Verwendung von Eisensulfiden wie z. B. dem Pyrit machten die Erfinder die überraschende Entdeckung, dass entgegen ihren Erwartungen in der abschließenden Rauchgasreinigung kein erhöhter SO₂-Gehalt kompensiert werden musste. Stattdessen sank der SO₂-Gehalt im Abgas, während der Verbrauch im Bereich der alkalischen Rauchgasreinigung anstieg. Weiterhin wurde ein höherer HCl-Gehalt im Abgas und ein erniedrigter Dioxin- und Furangehalt festgestellt. Die Erfinder nehmen an, dass die frisch gebildeten Eisenoxide ebenfalls die Oxidation der Sulfid-Ionen sowie des gegebenenfalls vorhandenen SO₂ zum Schwefeltrioxid erleichtern. Dies kann als Grund für die Reduktion des SO₂-Gehalt angesehen werden und würde in den nachfolgenden Zügen zur Sulfatisierung von Halogenid-Salzen führen, was z. B. den erhöhten HCl-Gehalt erklären kann. Dies verringert gleichsinnig das Ausmaß an Halogenid-induzierter Korrosion der Seitenwände der Züge und der Berührungsheizflächen.

In der abschließenden Rauchgasreinigung wurde erwartungsgemäß eine höhere Belastung des Rauchgases mit oxidischen Partikeln festgestellt. Überraschender Weise ging die Belastung der nachgeschalteten Schwebstoff-Filter für Verunreinigungen und Kondensate zurück. Eine Untersuchung der oxidischen Partikel ergab, dass die ausgetragenen Eisenoxidpartikel über ihre große Oberfläche einen Teil der als Sublimate anfallenden anorganischen Verunreinigungen gebunden und mit ausgetragen hatten.

Die vorliegende Erfindung stellt ein Verfahren bereit, mit dem inhomogene, Pyrolyseprodukte enthaltende Rauchgase beschleunigt äquilibriert werden. Punktuelle Schadstoffbelastungen und Überhitzungen im Rahmen der nachträglichen Reaktion von Pyrolyseprodukten können vermieden werden. Zudem wird ein Verfahren bereitgestellt, bei dem eine verbesserte Filtrierbarkeit von Schwebstoffen gewährleistet werden kann. Weiterhin stellt die vorliegende Erfindung ein Verfahren bereit, mit dem Korrosion und Belagbildung verringert werden kann.

Gegenstand der Erfindung ist auch eine Vorrichtung zur Äquilibrierung von Rauchgas in einer Müllverbrennungsanlage, umfassend einen Feuerraum mit Zünddecke, Ausbranddecke und Seitenwänden sowie Rauchgas-abflussseitig angeordnet Anfahr- und Stützbrenner, Feuerfestzustellung, Strahlungszüge, einen konvektiven Zug mit Überhitzern, Verdampfern und Economisern und eine abschließende Rauchgas-Reinigung, dadurch gekennzeichnet, dass zumindest im Bereich des Übergangs vom Feuerraum in den ersten Zug eine Dosiervorrichtung zur Einleitung von brennbaren, nicht-oxidische Eisenpartikel enthaltenden Feststoffen zusammen mit sauerstoffhaltigem Gas angeordnet ist, wobei im Mündungsbereich der Dosiervorrichtung eine Einrichtung zur Zündung der Partikel angeordnet ist.

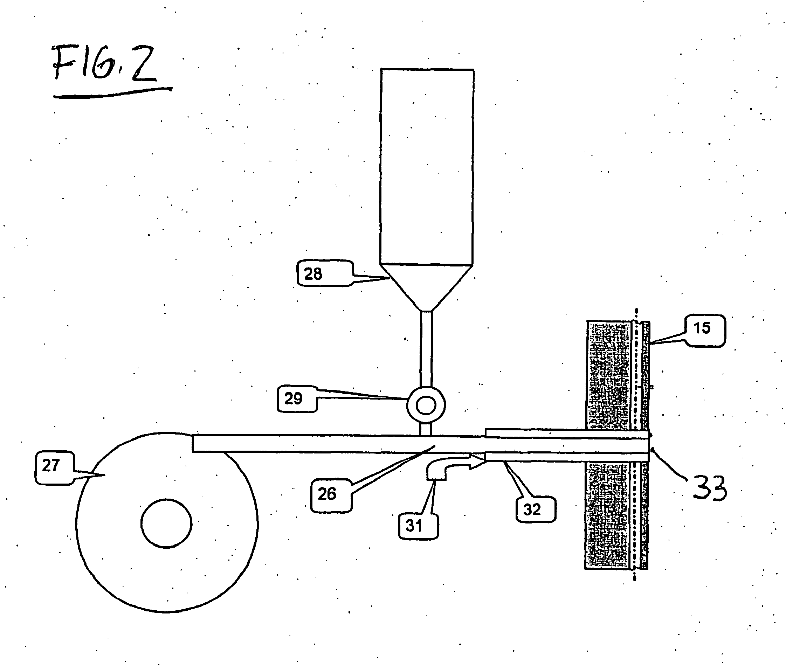

Weitere Vorteile ergeben sich an Hand des nachfolgenden Ausführungsbeispiels, erläutert an Hand der Figuren 1 A, 1 B und 2.
Figur 1 A zeigt schematisch eine Müllverbrennungsanlage mit einer erfindungsgemäßen Vorrichtung.
Figur 1 B zeigt einen Querschnitt der Anlage aus Figur 1 A im Bereich der erfindungsgemäßen Vorrichtung.
Figur 2 zeigt die erfindungsgemäße Vorrichtung aus Figur 1 im Detail.

Fig. 1 veranschaulicht schematisch eine Müllverbrennungsanlage mit einem Feuerraum 1 in den über einen Zuteiler 6 die Brennstoffzufuhr 10 erfolgt. Die Seitenwände 9 des Feuerraums sowie seine Zünddecke 7 und Ausbranddecke 8 sind mit einer Feuerfestzustellung 15 versehen. Der über den Zuteiler 6 aufgegebene Brennstoff kommt auf einem Verbrennungsrost 11 zu liegen. Die Primärluft 13 für die Verbrennung wird in bekannter Weise von unten durch den Verbrennungsrost 11 dem Brennstoff zugeführt. Über Anfahr- und Stützbrenner 24 wird der Brennstoff zunächst gezündet und der Feuerraum 1 auf die benötigte Temperatur gebracht. Das Rauchgas fließt aus dem Feuerraum 1 über den Übergang zum ersten Zug 18 in den ersten Zug 2. Sekundärluft 14 wird zuflussseitig am Übergang zum ersten Zug 18 dem Brennstoff zugeführt. Anschließend fließt das Rauchgas durch den ersten Strahlungszug 2, den zweiten Strahlungszug 3 sowie den dritten Strahlungszug 4 in den konvektiven Zug 5, umfassend Überhitzer, Verdampfer und Economiser. Nachfolgend wird das Rauchgas über den Abgaskanal 23 zur abschließenden Rauchgasreinigung geführt. Im Betrieb werden feste Brennstoffreste über einen Schlackefallschacht 12 aus dem Feuerraum 1 kontinuierlich entfernt und neues Brennstoffgemisch über den Zuteiler 6 zugeführt.

Erfindungsgemäß ist oberhalb des Übergangs 18 vom Feuerraum 1 in den ersten Strahlungszug 2 eine Vorrichtung zum Einbringen von brennbaren, nicht-oxidischen Eisenverbindungen in das inhomogene Rauchgas über einen sauerstoffhaltigen Gasstrom angeordnet. Eine mögliche, erfindungsgemäße Vorrichtung wird schematisch in Figur 2 wiedergegeben. Die Eisenverbindung wird z. B. über einen Vorratsbehälter 28 mit angeschlossenem Fallrohr einem Dosierventil 29 zugeführt, welches abflussseitig mit einer Gasstromleitung 26 verbunden ist. Ein Gebläse bzw. Kompressor 27 führt ein sauerstoffhaltiges Gas mit erhöhtem Druck durch die Gasstromleitung 26 einem Düsenkopf 33 zu, welcher an der Innenwand des Übergangsbereichs zwischen Feuerraum 1 und erstem Strahlungszug 2 mündet. Als geeignete Gebläse können z. B. Drehkolbengebläse oder Verdichtung wie Rootsgebläse oder Kompressoren mit Ansaug- und Injektor-Einrichtung verwendet werden. Gebläse können einen dauerhaften Gasstrom mit einem Überdruck im Bereich von bis zu 1 bar zur Verfügung stellen und eignen sich vor allem für den kontinuierlichen Betrieb. Kompressoren sowie Ansaug- und Injektor-Einrichtungen mit Druckluftschleusen sind besser für den intermittierenden Betrieb geeignet, bei dem die Eisenverbindung im sauerstoffhaltigen Gasstrom gepulst mit erhöhter Geschwindigkeit in das Rauchgas eingebracht wird. Die pro Zeiteinheit ausgetragene Menge an Eisenverbindung kann über das Dosierventil 29, welches z. B. in Form einer Zellenradschleuse ausgeführt sein kann, variiert werden. Abflussseitig zum Dosierventil 29 ist die Gasstromleitung 26 mit dem Düsenkopf 33 über einen Mischer 32 verbunden. Der Mischer 32 weist Außenöffnungen 31 zum zusätzlichen, geregelten Ansaugen von Außenluft auf.

Bevorzugt verfügt ein solcher Brenner zusätzlich über eine am abflussseitigen Ende im Inneren des Zuges angeordnete Zündvorrichtung. Die Zündvorrichtung bewirkt z. B. über einen im Ausblasbereich des Düsenkopfes 33 piezoelektrisch erzeugten Funken die zuverlässige Zündung von brennbaren Anteilen im Gasgemisch. Dadurch wird auch bei intermittierender Eintragung von Eisenverbindung in Gasströme mit schwankender Temperatur eine stete und sofortige Umsetzung von eingebrachter Verbindung zu feinteiligem Eisenoxid vorteilhaft gewährleistet.

Figur 1 B veranschaulicht schematisch die Anordnung von insgesamt 5 Düsenköpfen 33 einer erfindungsgemäßen Vorrichtung in einer horizontalen Ebene im Übergangsbereich vom Feuerraum 1 in den ersten Strahlungszug 2. Die Düsen sind über eine Ringleitung mit einem Gebläse 27 mit nachgeschaltetem Dosierventil 29 und Vorratsbehälter 28 verbunden. Hierbei deckt der Ausblasbereich einer Düse jeweils den Wandbereich neben den jeweils gegenüberliegenden Düsen ab. Die Ausblasbereiche kämmen oder überlappen und gewährleisten damit eine gleichmäßige Partikelverteilung insbesondere im Querschnittszentrum des Rauchgasstroms. Die erhöhte Strömungsgeschwindigkeit des Rauchgases im Querschnittszentrum wird so durch eine höhere Partikelkonzentration kompensiert und eine einheitliche Konzentration an Partikeln wird eingestellt. Anzahl, Ausrichtung und Sprühbereich der Düsen, hier als Beispiel mit kämmendem Ausblasbereich dargestellt, können anlagenabhängig variiert werden, um eine homogene Verteilung in allen Bereichen zu gewährleisten. So kann z. B. über Düsen mit variierbarem Ausblasbereich intermittierend im Wechsel der wandnahe Bereich und das Zentrum des Rauchgases beaufschlagt werden. Weitere Vorteile ergeben sich aus dem nachfolgend beschriebenen Ausführungsbeispiel.

In einer Müllverbrennungsanlage ausgelegt für 10 bis 20 t Hausmüll pro Stunde, aufgebaut wie z. B. in Fig. 1 veranschaulicht, wurde durchmischter Müll mit einem Durchsatz von 12 Tonnen Müll pro Stunde verbrannt. Der Heizwert des Hausmülls betrug im Mittel 10 MJ pro kg mit einer mittleren Schwankung von +- 5 MJ pro kg. Als Ersatzbrennstoff diente eine stark kunststoffhaltige Fraktion mit einem mittleren Heizwert von (30 +- 4) MJ pro kg. Das dabei anfallende Rauchgasvolumen lag bei ca. 61.000 Nm³ / h (Norm-Kubikmeter pro Stunde). Durch Zugabe der stark kunststoffhaltigen Fraktion wurden Schwankungen im Heizwert und Verbrennungsverhalten, wie sie bei normalem Hausmüll auftreten, alle 2 Stunden simuliert.

Als brennbare, nicht oxidische Eisenverbindung wurde natürlicher Pyrit der Zusammensetzung FeS₂ (bis zu 5% Stöchiometrieabweichung durch Verunreinigungen) in einem Vorratsbehälter 28 wie in Fig. 2 veranschaulicht vorgelegt und über ein Dosierventil 29 in eingestellter Menge der Gasstromleitung 26 zugeführt. Der Gasstrom wurde mit Hilfe eines Kompressors intermittierend erzeugt. Der Gasstrom wurde mit einem Überdruck von bis zu 4 bar mit einer mittleren Strömungsgeschwindigkeit von 400 m/sec durch die Gasstromleitung zu den Düsenköpfen 33 geführt. Der Ausblasbereich der Düsenköpfe erstreckt sich auf ein quer zur Strömungsrichtung des Rauchgases ausgerichtetes Volumen, welches den gesamten Querschnitt des Übergangs 18 im wesentlichen abdeckt.

Als Zündvorrichtung kann hier z. B. eine separat mit Gas und Sauerstoff gespeiste Zündflamme direkt im Ausblasbereich des jeweiligen Düsenkopfes dienen. Dadurch wird die Eisenverbindung vorteilhaft auch in kaltem Rauchgas direkt zu Beginn der Einleitung mit einer Flammtemperatur von ca. 1000 °C zur Reaktion gebracht.

Im Betrieb wurde eine Menge von bis zu 3,0 kg pro Stunde an Pyrit in den Rauchgasstrom eingebracht. Dies war mit einer Gesamtmenge an Gas im Gasstrom von bis zu 450 Nm³ pro h verbunden. Als sauerstoffreiches Gas diente synthetische Luft. Der Sauerstoff-Überschuss bezogen auf eine vollständige Umsetzung zu Fe₂O₃ und SO₃ betrug mindestens das etwa 10fache und maximal das etwa 100fache des theoretischen Sauerstoffbedarfs. Die Rauchgasmenge wurde so durch Einbringen der Eisenverbindung um maximal 1,5% erhöht. Zuflussseitig zur Rauchgasreinigung wurde der Gehalt an SO₂ und HCl im Rauchgas bestimmt.

Im Vergleich ist die erfindungsgemäße Müllverbrennung während der Verbrennung unter beschleunigter Äquilibrierung durch einen niedrigeren, gleichmäßigeren SO₂-Gehalt sowie durch einen erhöhten HCl-Gehalt gekennzeichnet. Die entsprechenden Mess- und Durchschnittswerte für einen jeweils 3tägigen Betrieb der Anlage sind in Tabelle 1 wiedergegeben.

**Tabelle 1**

| Vergleich | | | Erfindung | | |
|---|---|---|---|---|---|
| Stoff | Durchschnitt | Maximum | Stoff | Durchschnitt | Maximum |
| HCl | 970 mg/Nm³ | 2100 mg/Nm³ | HCl | 1020 mg/Nm³ | 2500 mg/Nm³ |
| SO₂ | 380 mg/Nm³ | 1100 mg/Nm³ | SO₂ | 310 mg/Nm³ | 710 mg/Nm³ |

Bei erfindungsgemäßem Betrieb wurde in der abschließenden Rauchgasreinigung gleichsinnig zu den in Tabelle 1 wiedergegebenen Werten ein leicht erhöhter Verbrauch an Neutralisationsmittel im Bereich der alkalischen Gasreinigung festgestellt. Der erhöhte Verbrauch an alkalischem Neutralisationsmittel kann mit dem erhöhten Gehalt an saurem HCl-Gas erklärt werden.

Die Erfinder gehen davon aus, dass die frisch erzeugten Eisenoxid-Partikel eine Umsetzung von vorhandenem SO₂ zu SO₃ begünstigen und dieses wiederum aus Halogeniden HCl-Gas erzeugt. Die erleichterte Oxidation von SO₂ über das erzeugte Eisenoxid kann auch als Grund dafür angesehen werden, dass auch bei intermittierender Einleitung der Eisenverbindung in Abständen von 10 Sekunden die geschilderten Effekte erzielt wurden.

Insgesamt wurde bei erfindungsgemäßem Betrieb in der Rauchgasreinigung eine erhöhte Belastung der Partikelfilter festgestellt, was durch die erzeugten Eisenoxid-Partikel erklärt werden kann. Gleichsinnig hierzu wurde eine stark verringerte Belastung des Rauchgases an organischen Stoffen angegeben als Gesamtkohlenstoffen sowie Dioxinen und Furanen festgestellt. Letzteres kann mit der Äquilibrierung und Homogenisierung des Rauchgases erklärt werden. Durch das Homogenisieren des Rauchgases unter erleichterter Einstellung eines physikalischen und chemischen Gleichgewichts wird die Entstehung von schädlichen, metastabilen Verbindungen wie z. B. Ruß oder aromatische Kohlenwasserstoffe durch im Ungleichgewicht unkontrolliert reagierende Pyrolysegase verhindert.

### Bezugszeichenliste

- 1: Feuerraum
- 2: erster Strahlungszug
- 3: zweiter Strahlungszug
- 4: dritter Strahlungszug
- 5: konvektive Züge
- 6: Zuteiler
- 7: Zünddecke
- 8: Ausbranddecke
- 9: Seitenwände
- 10: Müllzufuhr
- 11: Verbrennungsrost
- 12: Schlackefallschacht
- 13: Primärluft
- 14: Sekundärluft
- 15: Feuerfestzustellung

- 18: Übergang zum ersten Zug
- 19: Schutzverdampfer
- 20: Überhitzer
- 21: Verdampfer
- 22: Economiser
- 23: Abgaskanal
- 24: Anfahr- und Stützbrenner
- 26: Gasstromleitung
- 27: Kompressor bzw. Gebläse
- 28: Vorratsbehälter
- 29: Dosierventil

- 31: Außenöffnung
- 32: Mischer
- 33: Düsenkopf

## Patentansprüche

1. Verfahren zur beschleunigten Äquilibrierung von Rauchgas in Müllverbrennungsanlagen, **dadurch gekennzeichnet, dass** mindestens eine brennbare, nicht-oxidische Eisenverbindung über einen sauerstoffreichen Gasstrom in das Rauchgas eingebracht wird, dass die Eisenverbindung unter Wärmefreisetzung und unter Sauerstoffüberschuss oxidiert wird, dass die Struktur der Eisenverbindung unter Ausbildung von gasförmigen Oxidationsprodukten zerstört wird, dass aus den Bruchteilen der zerstörten Struktur Eisenoxid-Partikel mit hoher Eigentemperatur gebildet werden, dass die frisch gebildeten Eisenoxidpartikel im Rauchgasvolumen verteilt werden und dass unvollständig abreagierte Rauchgas-Anteile im Kontakt mit der Oberfläche der frisch gebildeten Eisenoxidpartikel äquilibriert werden.

2. Verfahren nach dem vorhergehenden Anspruch, **dadurch gekennzeichnet, dass** als Eisenverbindung mindestens eine Verbindung aus der Gruppe bestehend aus Eisensalzen organischer Säuren, Eisencarbonyl-Verbindungen oder Eisen-Sulfiden ausgewählt wird.

3. Verfahren nach dem vorhergehenden Anspruch, **dadurch gekennzeichnet, dass** als Sulfid Pyrit verwendet wird.

4. Vorrichtung zur Äquilibrierung von Rauchgas in einer Müllverbrennungsanlage, umfassend einen Feuerraum (1) mit Zünddecke(7), Ausbranddecke (8) und Seitenwänden (8) sowie Rauchgas-abflussseitig angeordnet Anfahr- und Stützbrenner (24), Feuerfestzustellung (15), Strahlungszüge (2,3,4), einen konvektiven Zug (5) mit Überhitzern (20), Verdampfern (21) und Economisern (22) und eine abschließende Rauchgas-Reinigung, **dadurch gekennzeichnet, dass** zumindest im Bereich des Übergangs vom Feuerraum (1) in den ersten Zug (2) eine Dosiervorrichtung zur Einleitung von brennbaren, nicht-oxidische Eisenpartikel enthaltenden Feststoffen zusammen mit sauerstoffhaltigem Gas angeordnet ist, wobei im Mündungsbereich der Dosiervorrichtung eine Einrichtung zur Zündung der Partikel angeordnet ist.

## Claims

1. Method for accelerated equilibration of flue gas in waste incinerators, **characterised in that** at least one flammable, non-oxidic iron compound is introduced along with an oxygen-rich gas stream into the flue gas, that the iron compound is oxidised under an exothermic reaction in the presence of surplus oxygen, that the structure of the iron compound is disrupted to form gaseous oxidation products, that iron oxide particles with high intrinsic temperature are formed from the fractions of the disrupted structure, that the nascent iron oxide particles are dispersed in the volume of the flue gas, and that the incompletely reacted flue gas portions are equilibrated by contacting with the surface of the freshly formed iron oxide particles.

2. Method according to the preceding claim, **characterised in that** at least one compound from the group consisting of iron salts of organic acids, iron carbonyl compounds or iron sulphides is selected as an iron compound.

3. Method according to the preceding claim, **characterised in that** pyrite is used as a sulphide.

4. Device for equilibration of flue gas in a waste incinerator, comprising a furnace chamber (1) with ignition cover (7), burn-out cover (8) and side walls (9), as well as comprising start-up and operational burners (24) that are arranged downstream to the flue gas flow, refractory lining (15), flue draughts (2, 3, 4), a convective draught (5) with super-heaters (20), evaporators (21) and economizers (22), and a final flue gas purification, **characterised in that** at least in the transition region from the furnace chamber (1) into the first draught (2), a metering device is arranged for the supply of flammable solids that contain non-oxide iron particles together with oxygen-containing gas, and with a device for igniting the particles being arranged in the outlet region of said metering device.

## Revendications

1. Procédé d'équilibrage accéléré de gaz de fumées dans des installations de combustion de déchets, **caractérisé en ce qu'**au moins un composé de fer sans oxyde combustible est introduit dans le gaz de fumées par l'intermédiaire d'un courant gazeux riche en oxygène, **en ce que** le composé de fer est oxydé par libération de chaleur et sous l'effet d'un excès d'oxygène, **en ce que** la structure du composé de fer est détruite par formation de produits d'oxydation gazeux, **en ce que** des particules d'oxyde de fer avec une température naturelle élevée sont formées à partir des débris de la structure détruite, **en ce que** les particules d'oxyde de fer nouvellement formées sont réparties dans le volume de gaz de fumées et **en ce que** des fractions de gaz de fumées n'ayant pas entièrement réagi en contact avec la surface des particules d'oxyde de fer nouvellement formées sont équilibrées.

2. Procédé selon la revendication précédente, **caractérisé en ce qu'**au moins un composé du groupe constitué par les sels de fer d'acides organiques, les composés de fer-carbonyle ou les sulfures de fer est sélectionné en tant que composé de fer.

3. Procédé selon la revendication précédente, **caractérisé en ce que** de la pyrite est utilisée en tant que sulfure.

4. Dispositif d'équilibrage de gaz de fumées dans une installation de combustion de déchets, comprenant un foyer (1) avec un plafond d'allumage (7), un plafond de combustion (8) et des parois latérales (9) ainsi que des brûleurs de démarrage et auxiliaires (24) disposés côté écoulement des gaz de fumées, un revêtement réfractaire (15), des conduits de rayonnement (2, 3, 4), un conduit convecteur (5) avec des surchauffeurs (20), des évaporateurs (21) et des économiseurs (22) et un épurateur de gaz de fumées final, **caractérisé en ce qu'**au moins dans la zone du passage entre le foyer (1) et le premier conduit (2) un dispositif de dosage est disposé pour l'introduction de matières solides contenant des particules de fer sans oxydes combustibles conjointement avec un gaz contenant de l'oxygène, un système d'allumage des particules étant disposé dans la zone d'ouverture du dispositif de dosage.
